(19) Europäisches Patentamt / European Patent Office / Office européen des brevets

(11) **EP 4 242 103 A1**

(12) **EUROPEAN PATENT APPLICATION**
published in accordance with Art. 153(4) EPC

(43) Date of publication:
**13.09.2023 Bulletin 2023/37**

(21) Application number: **21889679.3**

(22) Date of filing: **09.11.2021**

(51) International Patent Classification (IPC):
**B64C 33/02** (2006.01)    **F16H 37/02** (2006.01)
**F16H 9/24** (2006.01)

(52) Cooperative Patent Classification (CPC):
**B64C 33/02; F16H 9/24; F16H 37/02**

(86) International application number:
**PCT/KR2021/016284**

(87) International publication number:
**WO 2022/098214 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.11.2020 KR 20200148620**

(71) Applicant: **Lee, Sang Cheol**
**Goyang-si, Gyeonggi-do 10440 (KR)**

(72) Inventor: **Lee, Sang Cheol**
**Goyang-si, Gyeonggi-do 10440 (KR)**

(74) Representative: **Sander, Rolf**
**IPNY AB**
**Birger Jarlsgaten 99A**
**11356 Stockholm (SE)**

(54) **ROTARY FLAPPING-WING FLIGHT APPARATUS FOR VERTICAL LIFT AND HORIZONTAL DESCENT**

(57) The present invention relates to a rotary flapping-wing flight apparatus having rotary wings, which flap at both sides of a fuselage of the flight apparatus through dual rotation for simultaneously revolving and rotating in the circulation direction of the inner middle, center top, outer middle and center bottom ends thereof, almost stand upright to perform upward flapping to be lifted without fluid resistance when the wings are passing the inner middle end thereof, and are almost horizontally spread out to perform downward flapping while pushing fluid in the vertical downward direction, when the wings are passing the outer middle end thereof.

FIG.3

EP 4 242 103 A1

**Description**

[Technical Field]

The present invention relates to a flapping-wing flight apparatus that moves both wings up and down; more specifically, a manned or unmanned rotary flapping-wing flight apparatus having rotary wings, which flap at both sides of a fuselage of the flight apparatus through dual rotation for simultaneously revolving and rotating in a circulation direction of inner middle, center top, outer middle and center bottom ends thereof, almost stand upright to perform upward flapping to be lifted without fluid resistance when the wings are passing the inner middle end thereof, and are almost horizontally spread out to perform downward flapping while pushing fluid in a vertical downward direction when the wings are passing the outer middle end thereof, so that it is possible to effectively generate lift while flapping at a high speed without inertial resistance.

[Background Art]

The inventor of the present invention/applicant has obtained Patent Registration No. 10-1845748 (2018.03.30), which is "Flapping-wing flight apparatus with varying wingspan", in which a lift force is generated in by a flapping method in which the wing span at a time when wings descend is greater than the wingspan at a time when the wings ascend.
The flight apparatus has one or more crank devices and one or more wings on the left and the right sides of a fuselage; each of the crank devices includes a crankshaft extending in front and rear directions of the fuselage, a crank pin revolving around the crankshaft, and a crank arm connecting the crankshaft and the crankpin; the each crank pin revolves in a rotation direction, passing through a furthest point from the fuselage when the crank pin descends, along a revolution orbit determined by a length of the crank arm; the fuselage has one or more wing flapping shafts each serving as a central axis of the flapping; each of the crank devices includes a wing crank connector connecting the crank pin and the wing; the wing includes a hinged outer wing joined to the wing crank connector, a hinge inner wing joined to a flapping movement shaft, and a hinge coupling part for connecting the hinge outer wing and the hinge inner wing; a linear distance between the wing crank connector and the flapping shaft increases or decreases according to a change in position on the revolution orbit of the crankpin due to relative rotation between the hinge outer wing and the hinge inner wing relative to the hinge coupling part as a central axis; and when the wing flaps downward to rotate about the flapping shaft according to revolution of the crankpin, a wingspan becomes longer and then shorter after passing a maximum point, and when the wing flaps upward, the wingspan becomes shorter and then longer as passing a minimum point.

[Related Document]

(Patent Document 1) Korean Patent No. 10-1845748 (Flapping-wing flight apparatus with varying wingspan)

[Disclosure]

[Technical problem]

Problems found in the technical review and simulation process of a flapping flight apparatus with varying wingspan, the apparatus developed by the inventor of the present invention/applicant, are as follows.

<Flapping-wing flight apparatus>

1. Negative lift force: Upward flapping is faster than downward flapping, and lift is proportional to the square of a flapping speed, and thus, efficiency of generation of a lift force by wing flapping is low.
This is because, during downward flapping, a wing crank connector and a hinge coupling part both move downward, so a downward angular velocity of flapping is relatively small, and during upward flapping, the wing crank connector moves upward and the hinge coupling part moves downward, so an upward angular velocity of flapping is relatively large.
2. Inertial resistance: When a wing makes a circular reciprocating motion, the direction and speed of flapping are periodically reversed, so an energy loss due to the inertial resistance is large.
3. Vertical oscillation: Since a fuselage of the aircraft rises at a time of downward flapping and descends at a time of upward flapping, industrial practicality is low due to the up-and-down shaking of the fuselage.

4. Impact and Vibration: Various vibrations and impacts take place on the flight apparatus due to inertial resistance caused by a change in direction of the flapping of the wing and the up-and-down shaking caused by the ascending and descending of the fuselage.

5. Overload occurrence: Since inertial resistance increases exponentially near the top dead center and bottom dead center of flapping, overload occurs, so a high-output drive source and a power transmission device are required.

6. Low-speed flapping: Due to inertial resistance caused by periodic reversal of a flapping direction, it is not possible to accelerate the flapping in one rotation direction like a propeller, so there is a great limit to high-speed flapping.

7. Heavy weight: In order to overcome the aforementioned inertial resistance, vibration, shock, overload, etc., an increased capacity of the drive source and the strong heavy frame of the flapping flight apparatus are required, so a payload is reduced.

8. Unsafe take-off and landing: Since the bottom dead center of the downward flapping is much lower than the height of the fuselage, legs supporting the fuselage are very long and unstable, making it difficult to stably take off and land.

9. Weak propulsion: Since the flat wings moves upward and downward only in a vertical direction, it is possible to generate a fuselage lifting force, but a function to generate forward propulsion is weak.

<Rotorcraft>

1. Severe flight noise: a rotorcraft can generate lift only when thin and long propellers thereof rotate at a very high speed, so the sound of high-speed rotation is too loud to operate in a city area.

2. Low flight efficiency: Unlike a gliding (airfoil-type) aircraft, a lift force is generated only by rotational power of a propeller, and thus, energy efficiency is low and long-distance flight is difficult.

3. High risk of crash: A flapping-wing flight apparatus can glide, but a rotor (quadcopter) aircraft has a very high risk of operation because it is easy to lose balance and control and fall even if only one propeller is slightly broken.

Therefore, an object of the present invention is to provide a new flapping-wing flight apparatus, which can generate almost no negative lift force during a wing flapping process, flap the wings at a high speed without inertial resistance, perform vertical take-off and landing, glide with the wings, and simultaneously solve a rotor (quadcopter) method's disadvantages of flight noise, energy efficiency, and flight stability.

[Technical Solution]

In order to solve the above problems, a flight apparatus of the present invention is

a rotary flapping-wing flight apparatus having at least one rotary flapping mechanism provided on each of left and right sides of a fuselage, the at least one rotary flapping mechanism have two or more rotary wings at regular intervals, which generate a lift force upon receiving a driving force from a drive source, by flapping in a dual rotation method that revolve around the wing revolution shaft and at the same time rotate around the wing rotation shaft, wherein, the driving source and a wing flapping mechanism support for supporting each of the rotary flapping mechanisms are coupled to the fuselage of the flight device, the wing flapping mechanism support is provided with: driving force transmission member configured as a driven gear or chain belt capable of transmitting a driving force of the drive source to a wing revolution shaft of each rotary flapping mechanism; and a wing revolution shaft pedestal surrounding and supporting the wing revolution shaft so as to enable rotation in place, a revolution shaft pedestal gear is fixedly coupled to a side surface of each wing revolution shaft pedestal; in a shape of an outer toothed gearwheel, roundly surrounding the wing revolution shaft so as to enable rotation in place, each of the rotary flapping mechanism is provided with: a wing revolution shaft extending in a direction almost parallel to the ground; two or more wing rotation shafts extending parallel to the wing revolution shaft at a same revolution distance and revolution interval; and wing revolution arms provided at a same installation interval for connecting the wing revolution shaft and each of the wing rotation shaft, each of the wing revolution arms is provided with: a rotational force transmission member consisted with a driven gear, a chain belt, or the like and rotating in engagement with the revolution shaft pedestal gear in response to the wing revolution shaft rotating in place to transmit a rotational force to each of the wing rotation shafts; and a wing rotation shaft pedestal surrounding and supporting each of the wing rotation shafts so as to enable rotation in place, each of the wing rotation shaft is provided with: one rotary wing in a shape in which two thin curved bodies of the same size are-fixedly coupled to each other so as to be symmetrical about the wing rotation shaft; and one or more wing rotation shaft gears each having a shape of an external toothed wheel surrounding the wing rotation shaft that are fixedly coupled to it,

the rotational force transmission member is provided with a combination of various gears or a combination of various gears or a combination of gears and chain belts which converts and transmits a rotational force of the wing revolution shaft to each of the wing rotation shaft gears, so that a rotation direction of the wing revolution shaft is opposite to a revolution direction thereof and a rotation angular velocity is 0.5 times a revolution angular velocity,

the rotational direction and the correlation between the revolution phase and the rotation phase of each of the rotary wings are set as follows:

the rotary wings flap downward to descend vertically in a state where the rotation phase of the rotary wings is almost horizontal in a revolution phase where each of the wing rotation shaft passes through a farthest point from the fuselage, while the rotary wings flap upward to rise vertically in a state where the rotation phase of the rotary wings is almost vertical in a revolution phase where each of the wing rotation shaft passes through a closest point to the fuselage,

the rotary wings revolving around the wing revolution shaft in a circulation direction of inner middle, center top, outer middle and center bottom ends thereof, when viewed from the fuselage,

at a time of passing through the inner middle end portion, flap vertically upward without resistance of a surrounding fluid in a state in which wing surfaces are erected in a substantially vertical direction, thereby hardly generating a negative lift force;

when passing through the upper central portion, the rotary wings flap outward with the wing surfaces moving outward while tilting upward at 45 degrees, so that the surrounding fluid is pushed outward and downward along the inclined wing surfaces, thereby generating a positive lift force;

when passing through the outer middle portion, the rotary wings flap downward with the wing surfaces spreading in a substantially horizontal direction, so that the surrounding fluid is pushed vertically downward, thereby generating a positive lift force;

when passing through the lower central portion, the rotary wings flap inward with the wing surface tilting downward at 45 degrees, so the surrounding fluid is pushed downward along the inclined wing surface to create a positive lift force;

when the rotary wings approach to the inner middle portion again, the fluid below the fuselage is rapidly extruded downward by the rotary wings compressing the fluid while approaching from both sides, thereby generating a positive lift force; and thus

it is characterized in that a negative lift force is hardly generated in a rotary wing flapping process in which the rotary wings revolve and rotate, and a positive lift force is effectively generated in the entire revolution phase of 360 degrees.

Meanwhile, the shape of the rotary wing is such that left- and right-wing surfaces are in line symmetry with respect to a wing rotation shaft, and one wing surface far from the fuselage may be formed in an upwardly convex (streamlined shape, etc.) shape, and the other wing surface closest to the fuselage may be formed in a downwardly convex curved shape (streamlined shape, etc.); so that a fuselage lifting force can be generated by a forward speed of the flight apparatus.

In order to generate not just the fuselage lifting force but also the forward propulsion by the rotary flapping, the wing surfaces of the rotary wings may be formed in a spirally long and gently twisted propeller shape in line symmetry along the wing rotation shaft, and may be formed in a spirally and gently twisted curved shape, which is a combination of the curved shape and the propeller shape.

Meanwhile, in order to cause the entire both wing surfaces of the rotary wings alternately unfolds upward in a convex curved shape when the both wing surfaces of the rotary wings alternately receive upward pressure from the fluid during a rotary wing flapping process,

a wing outer frame of the rotary wings may be formed of a rigid material, and the wing surfaces may be formed of a highly stretchable and highly elastic fiber material or rubber wing membrane and a highly elastic connecting member, like a trampoline;

Alternatively, a wing outer frame of the rotary wings may be formed of a rigid material, the wing surfaces may be formed of a round and flexible curved wing membrane, two or more circular motion curved rods coupled to the wing membrane may be provided between a front outer frame and a rear outer frame of the wing outer frame, and front and rear ends of the circular motion curved rods may be hinged to the front outer frame and the rear outer frame of the wing outer frame at an appropriate interval so as to enable a circular motion in a vertical direction. In this case, when the both wing surfaces of the rotary wings alternately receive upward pressure from the fluid, each of the circular motion curved rods performs a circular motion in one direction and the both wing surfaces of the rotary wings alternately unfold upwards in a convex shape.

Meanwhile, each of the rotary flapping mechanisms may be provided with a an individual drive source or may be controlled independently of each other, or a plurality of rotary flapping mechanisms may share one drive source or be linked to each other so that a revolution speed can be controlled differently. Here, in a case where four or more rotary flapping mechanisms to be controlled independently are installed in one rotary flapping-wing flight apparatus, a flight control may be performed simply by controlling a rotational speed of each rotary wing in conjunction with each other in the same manner as does an existing quadcopter.

[Advantageous Effects]

1. Elimination of negative lift force: Unlike an existing wing flapping method, wings rise almost vertically, so a negative lift force is hardly generated during an upward wing flapping process.

2. Elimination of inertial resistance: Rotary wings of the same weight revolve around the wing revolution shaft in the same rotation direction with the same revolution interval, so inertia resistance hardly occurs.

3. Elimination of up-and-down shaking: Since two or more rotary wings of the same shape and weight alternately flap downward at the same time difference, up-and-down shaking of the fuselage does not take place.

4. Elimination of engine overload: Since two or more rotary wings rotate at a constant direction and speed without a reciprocating motion that causes inertial resistance, a drive source is not overloaded periodically.
Since two or more rotary wings rotate at a constant direction and speed without a reciprocating motion that causes inertial resistance, a drive source is not overloaded periodically.

5. High-speed wing flapping possible: Since vibration, impact, and inertial resistance hardly take place during a wing flapping process, rapid acceleration and deceleration and high-speed wing flapping are possible, as does a rotor (propeller).

6. Generation of extrusion and lift force: By the rotary wings approaching from both sides while flapping downwards, a fluid pushed to the bottom of the fuselage is rapidly extruded downward, providing additional lift.

7. Lightweight of aircraft: Since there is almost no vibration, impact, and inertial resistance from wing flapping, the capacity of an engine and the strength of a frame can be significantly reduced compared to an existing method so the weight of the aircraft may also be reduced.

8. Enhanced energy efficiency: A lift force is generated in almost all revolution phases of wing flapping, high-speed flapping is possible without vibration and inertial resistance, and energy efficiency may be maximized.

9. Vertical take-off and landing possible: Unlike the existing wing flapping method, the two or more rotary wings effectively generate a lift force, so vertical take-off and landing and hovering flight are possible even in a confined space.

10. Large-sized aircraft possible: Unlike a reciprocating wing flapping method in which stress is concentrated on the wings due to inertial resistance, the rotary wing-flapping method does not cause stress concentration, so it is possible to manufacture a large-sized aircraft.

11. Generation of gliding lift force: Since one half wing far from the fuselage is in an upwardly convex and streamlined shape, and the other half wing close to the fuselage is covered by a flapping mechanism support, so it is possible to generate a gliding lift force by use of a forward speed.

12. Generation of forward propulsion: If the rotary wings have a twisted shape that is deflected in the opposite direction to a rotation direction of the rotary wings from the front to the rear like a propeller, the rotary wings push a fluid backward when revolving and rotating, thereby generating forward propulsion as well as the fuselage lifting force.

13. Standardization and modularization possible: If a flapping generating device is standardized and modularized and a plurality of flapping generating devices is coupled and interlocked to the fuselage, it is possible to manufacture a modular flight apparatus of a large or long shape or any of various shapes and sizes.

14. Elimination of wing flapping noise: Since a wing has an area 10 times larger than that in an existing propeller method, a wing speed may be greatly reduced, thereby causing no noise damage by wing flapping.

15. High safety against crash: In a multi-rotor system, even if a small failure occurs in one rotor, an aircraft is out of control, ended up crashing, but the present invention glides with wide wings, so the safety against crash and collision is high.

16. Improvement of maneuverability: If two or more flapping generating devices and drive sources are modularized and coupled to the fuselage and controlled in conjunction with each other as does a quadcopter, it is possible to easily control the flight speed, direction, and rising of the flight.

17. Improvement of space utilization: Two or more rotary wings alternately generate a lift force in each rotary wing flapping mechanism, but the area of an airplane stand does not increase by more than 50% of the area required for one rotary wing.

18. Industrial applicability: There is almost no up-and-down shaking, it is convenient and safe to maneuver, enlargement is possible, and energy efficiency is high, so there is high industrial applicability such as various measurement, material transportation, and manned flight.

[Description of Drawings]

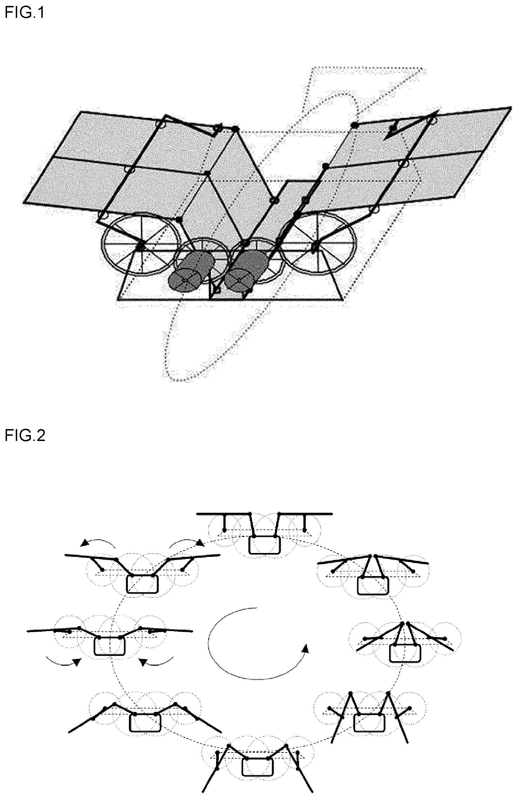

FIG. 1 is a perspective view of a cited invention for which the inventor of the present invention has obtained a patent, "flapping flight apparatus with varying wingspan".

FIG. 2 is a front view showing an overview of the mechanism and sequence of flapping in the flight apparatus of FIG. 1.

FIG. 3 is a perspective view of an embodiment of a flight apparatus according to the present invention, in which one rotary flapping mechanism having two rotary wings, to which a driving force is transmitted by a spur gear, is disposed on the left and right sides of a fuselage, respectively.

FIG. 4 is a plan view of the flight apparatus of the embodiment of FIG. 3, as viewed from above.

FIG. 5 is a schematic diagram showing a driving force transmission system in which a driving force of a drive source is converted and transmitted to a rotational force of a wing revolution shaft in the embodiment of FIG. 3.

FIG. 6 is a schematic diagram showing a rotational force transmission system in which a rotation direction and an angular velocity of a wing revolution shaft are converted and transmitted to a rotation direction and an angular velocity of a wing rotation shaft in the embodiment of FIG. 3.

FIG. 7 is a schematic diagram showing a method and sequence of flapping wings in the embodiment of FIG. 3.

FIG. 8 is a schematic diagram showing a correlation between a revolution phase angle of a wing revolution arm, a rotation phase angle of a rotary wing, and a fluid flow impinging on the rotary wing in the embodiment of FIG. 3.

FIG. 9 is a schematic diagram showing a change in the direction of fluid flow according to a flapping motion and a hydrodynamic correlation between a required driving force and a generated buoyancy force according to the change of the direction of the fluid flow according to the embodiment of FIG. 3.

FIG. 10 is an exemplary diagram showing a case in which a rotary wing is formed of an outer wing frame and a wing membrane in the embodiment of FIG. 3, wherein FIG. 10A shows a method using a curved frame capable of performing a reciprocating arc motion, and FIG. 10B shows a method of using a highly elastic material like a trampoline.

FIG. 11 is a perspective view of an embodiment of a flight apparatus according to the present invention, in which two rotary flapping mechanism having three rotary wings to which driving force is transmitted by a barbell gear are disposed on the left and right sides of a fuselage.

FIG. 12 is a plan view of the flight apparatus of the embodiment of FIG. 11, as viewed from above.

FIG. 13 is a perspective view of an embodiment of a one-person flight apparatus according to the present invention, the apparatus having two rotary flapping mechanism in which a rotational force is transmitted to three rotary wings by one rotational force transmission chain belt.

FIG. 14 is a plan view of the flight apparatus of the embodiment of FIG. 13, as viewed from above.

FIG. 15 is a perspective view of a flight apparatus taking off or landing while an is standing in a vertical direction according to the embodiment of FIG. 13, as viewed from an oblique direction.

FIG. 16 is a perspective view of a method and shape of a flight apparatus taking off or landing while a pilot is standing in a vertical direction in the embodiment of FIG. 13, as viewed from the rear.

FIG. 17 is a side view of a method and shape of a flight apparatus taking off or landing while a pilot is standing in a vertical direction in the embodiment of FIG. 13, as viewed from the side.

FIG. 18 is a detailed view showing a mechanism in which a rotational force of a wing revolution shaft is transmitted to three rotary wings with a plurality of spur gears and one rotational force transmission chain belt in the embodiment of FIG. 13.

FIG. 19 is a perspective view of an embodiment of a flight apparatus according to the present invention in which four rotary flapping mechanism having a rotational force transmission chain belt for each of the three rotary wings are installed on the front, rear, left and right sides of a fuselage.

FIG. 20 is a detailed view showing a mechanism in which a rotational force of a wing revolution shaft is transmitted to three rotary wings by three rotational force transmission chain belts in the embodiment of FIG. 19.

FIG. 21 is a perspective view of an embodiment of a flight apparatus according to the present invention, in which four rotary flapping mechanisms each having an individual drive source are disposed on the left and right sides of a fuselage.

FIG. 22 is a front view of the flight apparatus of the embodiment of FIG. 21, as viewed from the front.

FIG. 23 is a plan view of the flight apparatus of the embodiment of FIG. 21, as viewed from above.

FIG. 24 is a plan view of the flight apparatus of the embodiment of FIG. 2 in which an upper fixed wing is removed.

FIG. 25 is a side view of the flight apparatus of the embodiment of FIG. 21, as viewed from the side.

FIG. 26 is a perspective view of one embodiment of a rotary flapping mechanism, showing the principle of how a circular motion curved rod rotates by pressure of a fluid and a wing membrane unfolds and folds.

FIG. 27 is a perspective view of an improved embodiment of FIG. 18, showing a mechanism in which a rotational force of a wing revolution shaft is transmitted to a plurality of rotary wings through one rotational force transmission chain belt on the same plane.

FIG. 28 is a perspective view of an improved embodiment of FIG. 20, showing a mechanism in which a rotational force of a wing revolution shaft is transmitted to a plurality of rotary wings by three rotational force transmission chain belts on the same plane.

[Mode for Disclosure]

Hereinafter, the present invention will be described in detail with reference to the accompanying drawings. However, for elements having the same function by the same configuration, the detailed description may be omitted by maintaining the same reference numerals even if the drawings are varied.

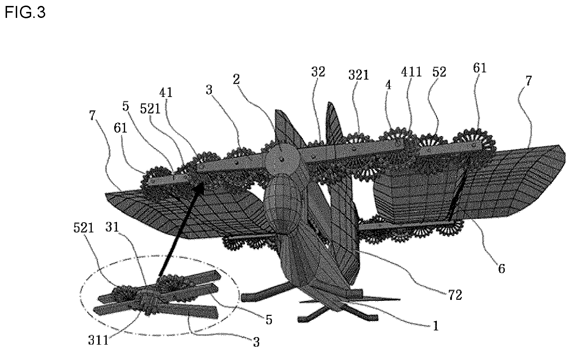

As shown in FIGS. 3, 11, 13, 19, and 21, a rotary flapping-wing flight apparatus of the present invention is a rotary flapping-wing flight apparatus having at least one rotary flapping mechanism provided on each of left and right sides of the fuselage 1,

the at least one rotary flapping mechanism 9 have two or more rotary wings 7 at regular intervals, which generate a lift force upon receiving a driving force from a drive source 2, by flapping in a dual rotation method that revolve around the wing revolution shaft 4 and at the same time rotate around the wing rotation shaft 6.

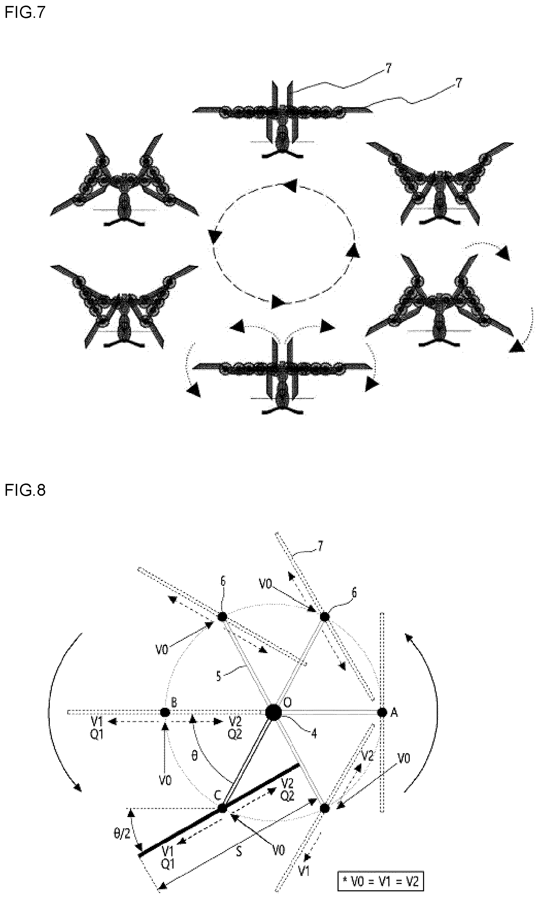

The rotary flapping-wing flight apparatus according to the present invention will be described based on the exemplary views of FIGS. 3 and 8 as follows.

<Composition of Components>

1. The fuselage 1 of the flight apparatus is provided with a flapping mechanism support 3 supporting the drive source 2 and each of the rotary flapping mechanism 9. Meanwhile, the drive source 2 may be installed on the fuselage 1 or on the flapping mechanism support 3 as needed.

2. The flapping mechanism support 3 is provided with: a driving force transmission member 32 configured as a driven gear or chain belt capable of transmitting a driving force of the drive source 2 to a wing revolution shaft gear 41 of each rotary flapping mechanism, and a wing revolution shaft pedestal 31 surrounding and supporting the wing revolution shaft 4 so as to enable rotation in place.

3. A revolution shaft pedestal gear is fixedly coupled to a side surface of each wing revolution shaft pedestal; in a shape of an outer toothed gearwheel roundly surrounding the wing revolution shaft so as to enable rotation in place.

4. Each of the rotary flapping mechanism 9 is provided with: the wing revolution shaft 4 extending in a direction substantially parallel to the ground; two or more wing rotation shafts 6 extending in a direction parallel to the wing revolution shaft 4; and wing revolution arms 5 provided at a same installation interval for connecting the wing revolution shaft 4 and each wing rotation shafts.

5. Each of the wing revolution arms 5 is provided with: a rotational force transmission member 52 consisted with driven gear, a chain belt, or the like and rotating in engagement with the revolution shaft pedestal gear 311 in response to the wing revolution shaft 4 rotating in place to transmit a rotational force to each of the wing rotation shafts 6; and a wing rotation shaft pedestal 51 surrounding and supporting each of the wing rotation shafts 6 so that each of the wing rotation shaft rotate in place.

6. On each of the wing rotation shaft, one rotary wing 7 in a shape in which two thin curved bodies of the same size are fixedly coupled to each other so as to be symmetrical about the wing rotation shaft; and one or more wing rotation shaft gears 61 each having a shape of an external toothed wheel surrounding the wing rotation shaft; are fixedly coupled.

7. Each of the rotational force transmission member 52 is provided with a combination of various gears or a combination of various gears and chains (or belts) which transmit a rotational force of the wing revolution shaft 4 to each of the wing rotation shafts 6, so that a rotation direction of the wing rotation shaft is opposite to a revolution direction thereof and a rotation angular velocity is 0.5 times a revolution angular velocity.

The rotational direction and the correlation between the revolution phase and the rotation phase of each of the rotary wings 7 are is set such that the rotary wings 7 flaps downward to descend vertically in a state where the rotation phase of the rotary wings 7 is almost horizontal in a revolution phase where each of the wing rotation shaft passes through a farthest point from the fuselage 1, while the rotary wings 7 flaps upward to rise vertically in a state where the rotation phase of the rotary wings 7 is almost vertical in a revolution phase where each of the wing rotation shaft passes through a closest point to the fuselage.

9. Meanwhile, as for a wing surface of the rotary wing 7, the left and right sides of the wing surface are symmetrical with respect to the wing rotation shaft, and one half of the wing surface far from the fuselage 1 may be formed in an upwardly convex shape, and the other half of the wing surface close to the fuselage may be formed in a downwardly convex shape.

10. Meanwhile, the wing surface of the rotary wing 7 may also be manufactured in a propeller shape that is spirally long and gently twisted along the wing rotation shaft, so that not only a fuselage lifting force but also a forward propulsion can be generated during the rotary wing flapping process.

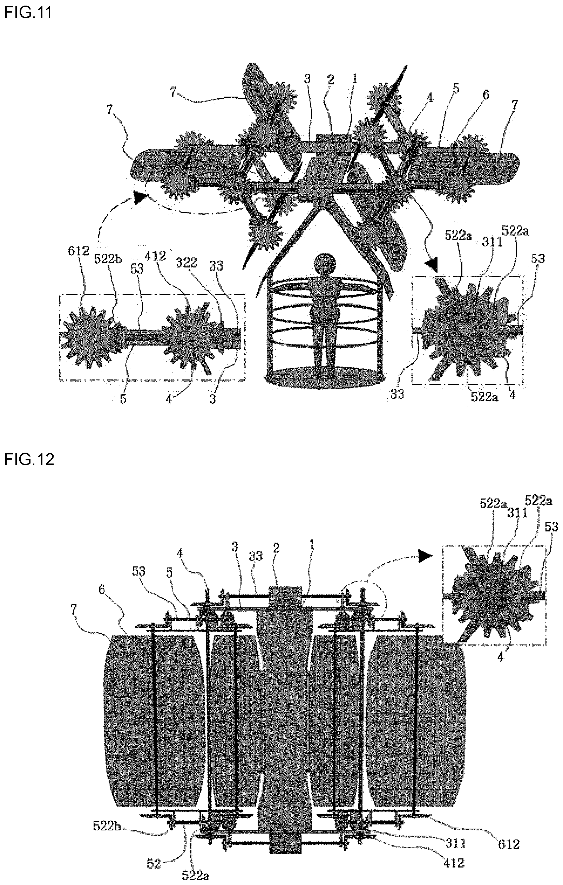

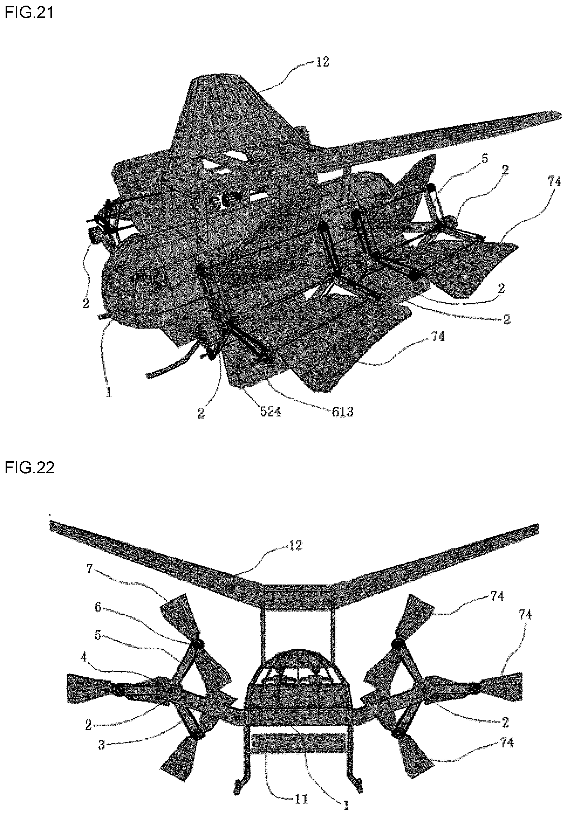

11. As for the drive source 2, one drive source 2 may be commonly used by the left and right rotary flapping mechanism 9 of the fuselage 1, as shown in FIG. 3 or FIG. 11, and one or more drive sources 2 may be provided for each rotary flapping mechanism, as shown in FIG. 21.

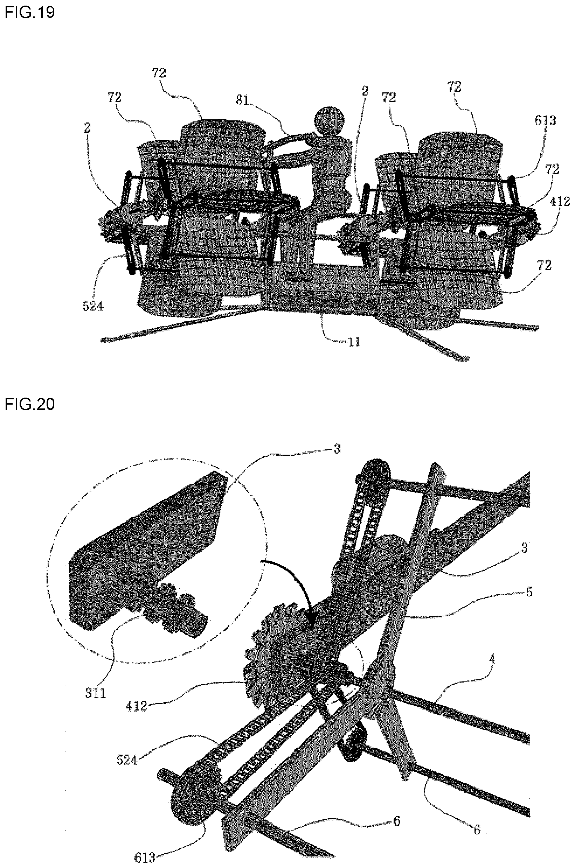

12. An independent fixed wing 12 may be installed at the fuselage 1 of the flight apparatus as shown in FIG. 20, and in this case, the speed, altitude, and direction of travel of the flight apparatus may be controlled by changing direction angles and an elevation angle of the fixed wing 12.

<Operating Principle>

As shown in FIG.3 and the like;

1. when the drive source 2 provides a driving force, the driving force is transmitted to the wing revolution shaft gear 41 and the wing revolution shaft 4 by the driving force transmission member 32, and accordingly, the wing rotation arm 5, the wing rotation shaft, and the rotary wing 7 revolve around the wing revolution shaft 4.

2. At this point, the rotational force transmission spur gear 521, which revolves while coupled to the wing revolution arm 5 and rotates in engagement with the stationary wing revolution shaft pedestal gear 311, rotates in the same rotation direction as a revolution direction.

3. Meanwhile, when there is an odd number of rotational force transmission spur gears 521 that transmit the rotational force of the wing revolution shaft gear 41 to the wing rotation shaft gear 61, the rotation direction of the wing rotation shaft gear 61 is opposite to the revolution direction.

4. In addition, in a case where a gear ratio of the revolution shaft pedestal gear 311 and the wing rotation shaft gear 61 is set to 1:2, the rotary wing 7 rotates 0.5 times in the opposite direction when revolving once.

5. Under these conditions, if an initial rotation phase of the rotary wing 7 is set such that the rotary wing 7 unfolds in the horizontal direction in a revolution phase passing through the farthest point from the fuselage, the rotary wing 7 performs revolution and rotation together in a rotary wing-flapping manner of lying horizontally at a time of descending and erecting vertically at a time of rising.

6. Meanwhile, in order to perform revolution and rotation together as described above, the rotary wing 7 may also use a barbell gear, a chain, or a belt as a rotational force transmission member, as shown in FIGS. 11, 18, 20, or the like.

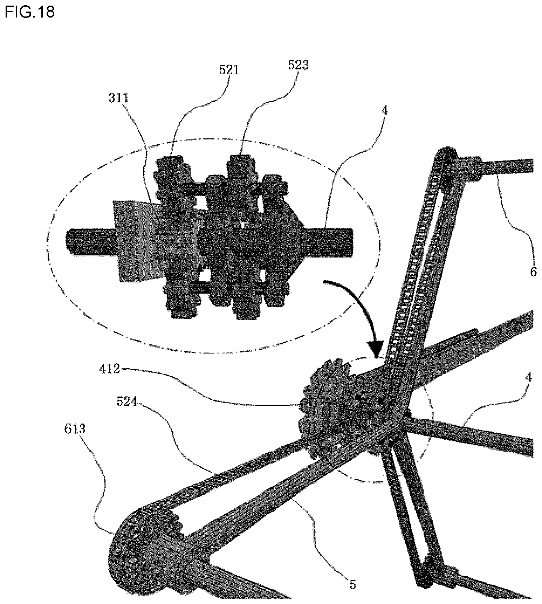

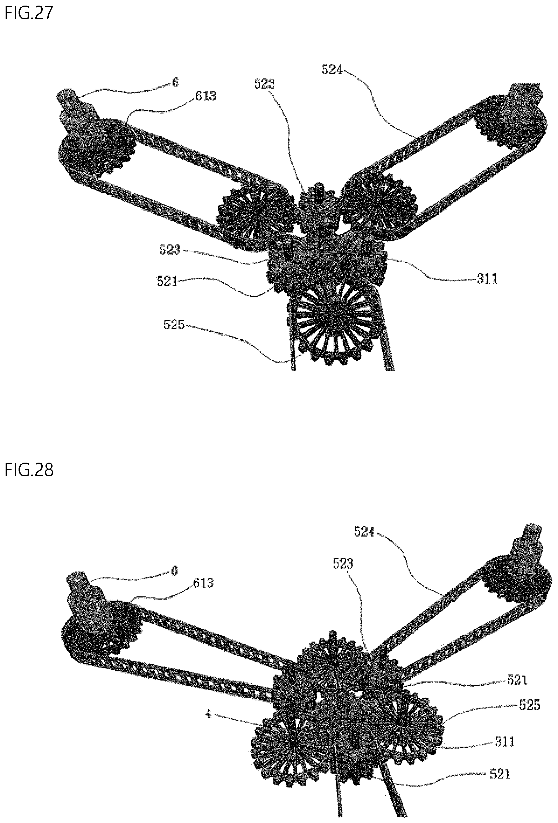

7. In addition, in the case of using a chain belt as the rotational force transmission member, a separate rotational force transmission chain belt 524 may be used for each wing rotation shaft gear 61 as shown in FIGS. 20 and 28, and a total of three wing rotation shaft gears 61 may use one rotational force transmission chain belt 524, as shown in FIGS. 18 and 27.

<Principle and Efficiency of Generating Lift Force>

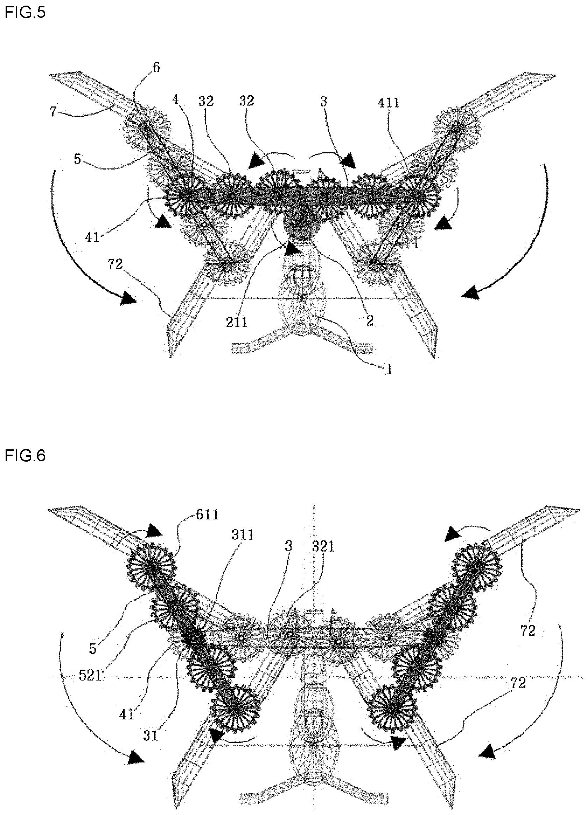

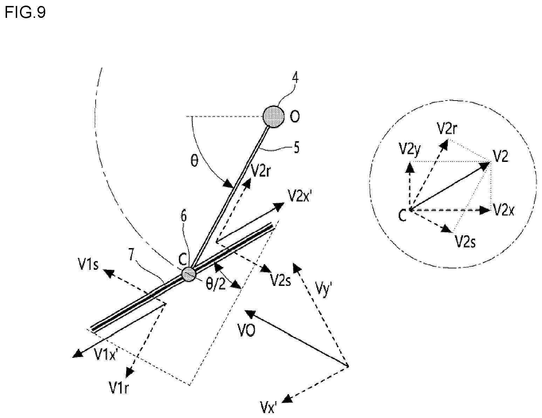

While the rotary wing 7 revolves and rotates in a direction of motion shown in FIGS. 6 and 7, a force of lifting the fuselage 1 is generated very effectively, and this will be explained hydrodynamically using the schematic diagrams of FIGS. 8 and 9 as follows.

First, suppose that a revolution radius of the rotary wing is R; a rotation phase angle is $\theta$; a revolution phase angle is $\alpha$; a rotation angular velocity is $\omega$; an idling velocity is Vo; a wing span is S; a density of fluid is $\rho$; a position of the wing revolution shaft is O; a position of the wing rotation shaft 6 at a revolution base point where the revolution phase angle is 0 (zero) is B; a position of the wing rotation shaft 6 when the revolution phase angle is $\theta$ is C; a flow rate of fluid hitting one revolving rotary wing 7 is Qo; a flow velocity of fluid flowing downward along the rotary wing surface among fluid hitting the rotary wing 7 is V1 and a flow rate thereof is Q1; a flow velocity of fluid flowing upward along the rotary wing surface is V2 and a flow rate thereof is Q2; on a coordinate system (x'-axis, y'-axis) of the wing surface direction of the rotary wing 7 with respect to the wing rotation axis 6, a direction toward the wing surface is the x'-axis and a direction vertical thereto is the y'-axis; on a coordinate system (s-axis, r-axis) in a orbital direction of the rotary wing 7, a tangential direction is the s-axis and a radius direction is the r-axis; and on a coordinate system (x-axis, y-axis) in a horizontal plane direction, a horizontal direction is the x-axis and a vertical direction is the y-axis; the revolution speed Vo is equal to a speed at which the fluid hits the rotary wing 7, resulting in Vo = R*$\omega$, and the revolution phase angle is $\theta$ = $\omega$*t, and the rotation phase angle of the rotary wing 7 is $\alpha$ = $\theta$/ 2 = ($\omega$/2)*t.

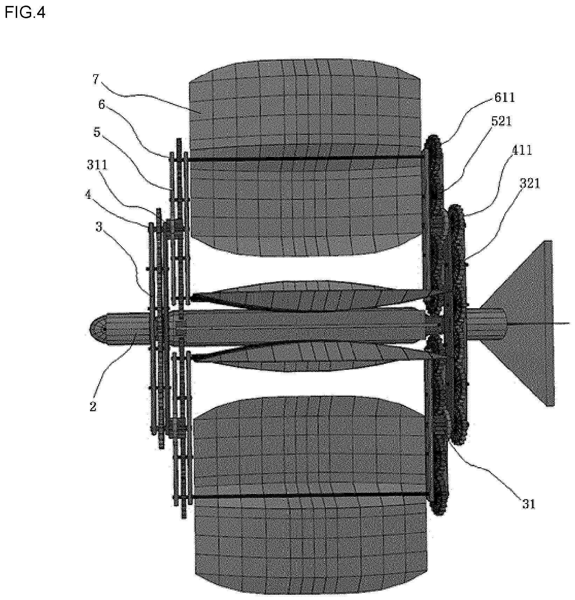

Accordingly, no matter what revolution phase the rotary wing 7 is located at, an extension line of the wing surface of the rotary wing 7 is always directed to point A shown in FIG. 4.

Meanwhile, assuming that an increasing direction of the rotation angle $\theta$ is a counterclockwise direction around the point O which is the wing revolution shaft 4, a driving force required for revolution of two rotary wings 7 located on the opposite sides to each other at a consistent speed Vo and a lifting force generated accordingly are calculated as follows.

(1) Since the momentum Fo per unit time of Qo is Qo = S*Cos($\theta$/2)*Vo,

$$Fo = \rho*Qo*Vo = \rho*S*Cos(\theta/2)*Vo*Vo$$

(2) The flow velocity in the x'-y' axis direction of Qo is

$$Vox' = Vo*Sin(\theta/2), \quad Voy' = Vo*Cos(\theta/2)$$

(3) At $\Sigma Fx' = 0$,

$$\rho*Qo*Vo*Sin(\theta/2) = \rho*Q1*V1 - \rho*Q2*V2$$

(4) There is no difference in gravity and pressure in the y' direction at point C, Vo = V1 = V2, and

Qo = Q1 + Q2 according to the law of conservation of mass, and thus, if Q1 and Q2 are calculated based on Qo*Sin($\theta$/2) = Q1-(Qo-Q1),

$$Q1 = 0.5*Qo*\{1+Sin(\theta/2)\}$$

$$Q2 = 0.5*Qo*\{1-Sin(\theta/2)\}$$

(5) A driving force Fs required in a tangential direction to a revolution orbit is

$$Fs = \Delta(m*V)s = \rho*Qo*Vo - \rho*Q1*V1s + \rho*Q2*V2s,$$

Since V1s = Vo*Sin($\theta$/2) and V2s = Vo*Sin($\theta$/2), and thus, this results in

$$\rho*Q1*V1s = 0.5*\rho*Qo*V*\{1+Sin(\theta/2)\}*\{Sin(\theta/2)\}$$

and

$$\rho*Q2*V2s = 0.5*\rho*Qo*V*\{1-Sin(\theta/2)\}*\{Sin(\theta/2)\}, \text{ so}$$

so
Since Qo = V*S*Cos($\theta$/2)

$$Fs = \rho*S*(Vo^2)*Cos(\theta/2)*[1-\{Sin(\theta/2)\}^2],$$

where given $\{Sin(\theta/2)\}^2 = 0.5*\{1-Cos(\theta)\}$,

$$Fs = 0.5*\rho*S*(Vo^2)*Cos(\theta/2)*\{1+Cos(\theta)\}.$$

(6) A lift force Fy due to the rotary wing-flapping is

$$Fy = \Delta(m*V)y = \rho*Qo*Voy + \rho*Q1*V1y - \rho*Q2*V2y,$$

$$Voy = Vo*cos(\theta), \quad V1y = Vo*sin(\theta/2), \quad V2y = Vo*sin(\theta/2)$$

and
Since

$$Qo = V*S*Cos(\theta/2), \quad Q1 = 0.5*Qo*\{1+Sin(\theta/2)\}, \quad Q2 = 0.5*Qo*\{1-Sin(\theta/2)\},$$

this results in

$$Fy = \rho*S*(Vo^2)*Cos(\theta/2)*[Cos(\theta) + \{Sin(\theta/2)\}^2]$$

where given

$$\{Sin(\theta/2)\}^2 = 0.5*\{1-Cos(\theta)\},$$

$$Fy = 0.5*\rho*S*(Vo^2)*Cos(\theta/2)*\{1+Cos(\theta)\}$$

(7) As shown in the above formulas (5) and (6), a required driving force Fs = the generated lifting force Fy, so they have the same magnitude.

Meanwhile, assuming that the rotation radius of the rotary wing 7 is the same as the revolution radius of the wing rotation shaft, at a time when the rotary wing 7 is spread horizontally, a descending speed of a tip furthest from the fuselage 1 is 1.5 times and a descending speed of a tip closest to the fuselage 1 is 0.5 times compared to a descending speed of a wing rotation shaft, and accordingly, a lifting force of the outermost tip is $1.5^2 = 2.25$ times the lifting force Fy, a lifting force of the innermost tip is $0.5^2 = 0.25$ times the lifting force Fy, and an additional lifting force enhancement of about 10% occurs on average.

As such, if the lifting force increases by about 10% despite the same area of wing surface, the size and weight of the rotary wing and the support structure may be reduced by 10%, so the energy efficiency increases accordingly.

In addition, in the final stage of the descending rotary flapping, a fluid under pressure from the left and right side by the rotary wings approaching from the left and right directions is rapidly extruded downward because the upper and lateral sides are blocked by the fuselage 1, and an additional lifting force is generated by reaction thereto.

Meanwhile, since two to four rotary wings are provided in one rotary flapping mechanism 9, the required driving force Fs and the generated lift force Fy are more than doubled compared to a case where only one rotary wing 7 is provided.

As described above, in the flight apparatus according to the present invention, almost 100% of the driving force Fs is converted by the drive source 2 into the lifting force Fy, so it can be said that this is a superior lifting force generating method compared to a rotary wing method and has the highest energy efficiency.

In addition, the wing rotation shaft 6 is located at the center of weight of each rotary wing 7, the wing revolution shaft 4 is located at the center of weight of the structure in which two or more rotary wings 7 are coupled, and the rotary wings 7 rotate in one direction, so when the rotary wings 7 revolve and rotate, vibration and shock due to eccentric loads or inertial resistance due to rapid change in rotation direction or speed do not occur at all, and therefore, even though a flapping direction changes while the rotary wings 7 pass through the top dead center and bottom dead center of the flapping, problems such as vibration, impact, and noise rarely occur and it is possible to maximize a lift force through smooth acceleration and ultra-high speed rotary wing flapping.

<Detailed Description About Shapes of Various Flight Apparatuses>

FIGS. 11 and 12 are exemplary views of a flight apparatus in which driving force is transmitted by barbell gears, and the driving force of the drive source 2 is transmitted to a revolution shaft babel gear 412 through a driving force transmission shaft 33 and a driving force transmission barbell gear 322.

As the revolution shaft barbell gear 412 rotates, the wing revolution shaft 4 and the wing revolution arm 5 rotate together, but the revolution shaft pedestal gear 311 fixed to the wing revolution shaft pedestal 31 does not rotate, so, as shown in the lower right side of FIG. 11, three rotational force receiving barbell gears 522a rotate in engagement with one revolution shaft pedestal gear 311.

The driving force transmitted to the rotational force receiving barbell gear 522a is transmitted sequentially to a rotational force transmission shaft 53, a rotational force transmission barbell gear 522b, a rotation shaft barbell gear 612, and the wing rotation shaft, and accordingly, the rotary wing 7 fixedly coupled to the wing rotation shaft 6 rotates in the opposite direction to the revolution direction at an angular velocity of 0.5 times a revolution angular velocity.

Here, in a case where a revolution radius of the rotary wing 7 is R; if there are two rotary wings as shown in FIG. 3, a maximum wingspan is about 2 * 20.5 * R, and if there are three rotary wings as shown in FIG. 11, a maximum wingspan is about 2 * R.

Meanwhile, when it comes to controlling a direction of travel of the flight apparatus; if a pilot moves his or her body forward, backward, leftward, or rightward (change of center of weight), the fuselage 1 and the rotary wings 7of the flight apparatus is tilted in a direction in which the body is moved, and the flight apparatus moves forward in the tilted direction.

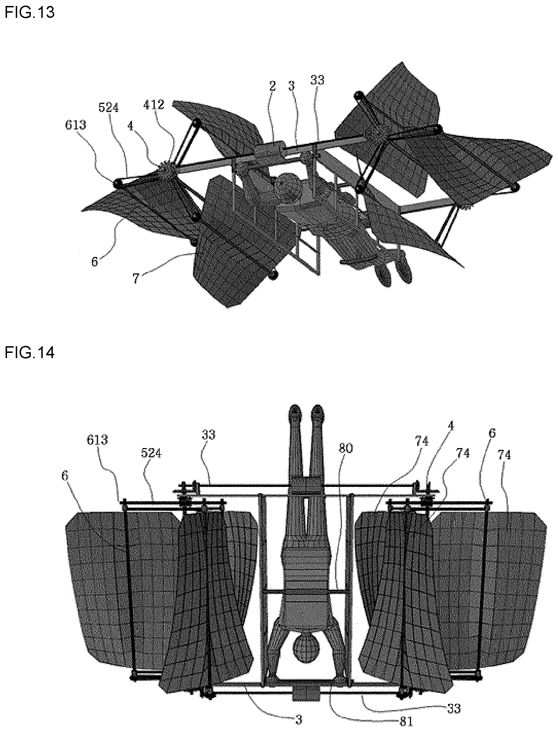

FIGS. 13 to 18 are exemplary views of a single-person rotary flapping-wing flight apparatus in a shape to be worn on a pilot's back, and the main features thereof are as follows.

    1. One rotational force transmission chain belt 524 transmits a rotational force to all three rotation shaft chain gears 613.

    As shown in FIG. 18, a rotational force transmission process proceeds in the order of the revolution shaft pedestal gear 311, the rotational force transmission spur gear 521, the rotational force transmission chain gear 523, the rotational force transmission chain belt 524, the rotation shaft chain gears 613, the wing rotation shaft 6, and the wing rotation 7. Meanwhile, as shown in FIG. 27, a rotational force transmission auxiliary gear 525 may be additionally installed to increase a contact area between the rotational force transmission chain belt 524 and the rotational force transmission chain gear 523 so as to enhance rotation in engagement.

    2. A pilot is able to control flight intuitively while manually changing an angle of attack of the rotary wings 7.

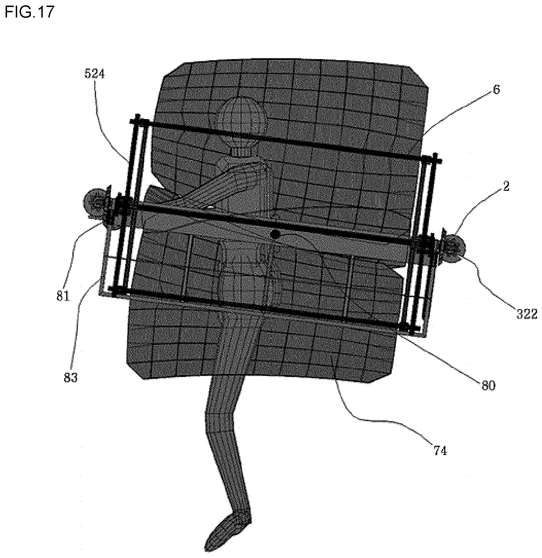

As shown in FIGS. 14 and 17, the rotary flapping mechanisms 9 located on the left and right sides of the fuselage are coupled to each other by an angle-of-attack-of-wing rotation shaft 80 extending horizontally to the center of weight in the front and rear directions, and the angle-of-attack-of-wing rotation shaft 80 is hinged to the fuselage 1 so as to enable relative motion in an arc in an up-and-down direction with respect to the fuselage 1;

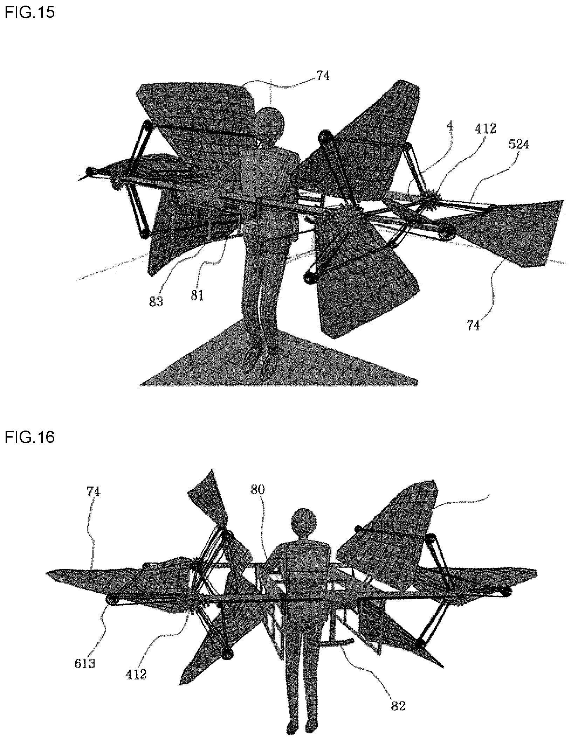

As shown in FIGS. 16 and 17, the center of weight of a standing pilot is located below the angle-of-attack-of-wing rotation shaft 80, and an elevation angle of the angle-of-attack-of-wing rotation shaft 80 is controlled using a flight control knob 81, and therefore, at a time of taking off or landing on the ground, the pilot keeps his or her body straight and straightens his or her legs to lower the center of weight and then intuitively controls an angle of attack of the rotary wings 7 and a speed of rotation of rotary wing flapping, thereby enabled to ascend and descend slowly and smoothly.

In addition, after vertical lifting of the flight apparatus, it is possible to freely control forward and backward movement and lifting and descending of the flight apparatus by tilting the angle of attack of the rotary wings 7 forward or backward; and by accelerating with an accelerator so as to make a flapping speed of the wings faster. Meanwhile, as for a control of direction of travel; like a flailing insect, a pilot can quickly twist his or her body or arms and legs to provide recoil, or slowly shift the center of weight of the body or arms and legs from side to side or front to back, enabling intuitive and simple control of instantaneous direction changes or gradual turning flight. Meanwhile, the battery 11 of the flight apparatus is preferably installed to allow the pilot to easily move back and forth along a height direction of the pilot so that the pilot can fly at a high speed in a horizontal position while changing the center of weight of the body.

3. The rotary wings 7 bent like a propeller provide propulsion as well as a lift force.

As shown in FIGS. 13 and 21, in a case where the rotary wings 7 are in a propeller shape that is spirally long and gently twisted along the wing rotation shaft, not only a lift force but also propulsion is generated in an upward and downward rotary flapping process. Therefore, even if the angle of attack of the rotary wings 7 is not tilted forward, the flight apparatus can be effectively accelerated and fly at a high speed. In other words, it can be said to be a new rotary wing flap method that implements a propulsion generating function, which is an advantage of the existing rotary wing method, and a lift force generating function, which is an advantage of the existing wing flapping method.

In addition, as shown in FIG. 13, in a case where one half rotary wing on the outer side of the wing revolution shaft 4 is in a shape like an airfoil such that the central portion of a wing surface is upwardly convex; even if the revolution speed of the rotary wings 7 is greatly reduced, a gliding function occurs due to a lift force generated by utilizing a forward speed, resulting in a significant increase in flight energy efficiency.

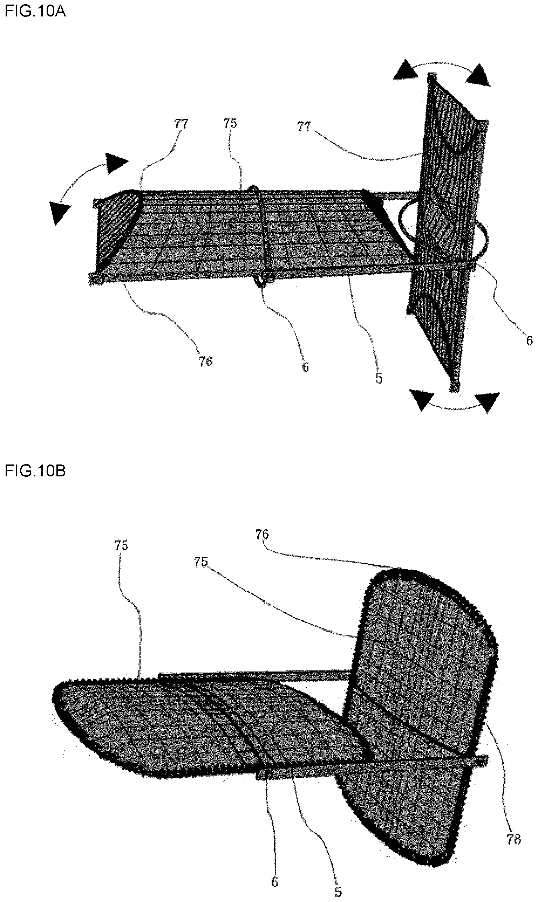

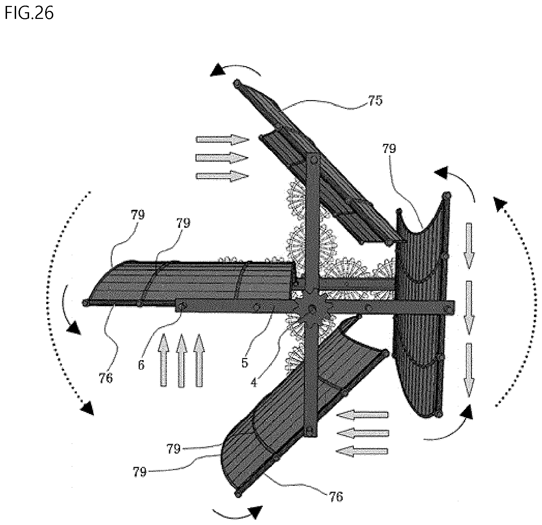

On the other hand, as shown in FIG. 10A, the wing outer frame 76 of the rotary wing 7 is formed of a rigid material, and the wing surface is formed of a highly stretchable and highly elastic wing membrane 75 like a trampoline and coupled to the wing outer frame 76 by a highly elastic connecting member 78; or, as shown in FIG. 10B or 26, if the wing outer frame 76 of the rotary wings 7 is formed of a rigid material, the wing surfaces are formed of a round and flexible curved wing membrane 75, and two or more arc motion curved rods 77 or circular motion curved rods 79 coupled to the wing membrane 76 are provided between a front frame and a rear frame of the wing outer frame 76, and front and rear ends of the circular motion curved rods are hinged to the front outer frame and the rear outer frame at an appropriate interval so as to enable a circular motion in a vertical direction; as the respective arc motion curved rods 77 or the circular arc rods rotate, the entire wing surfaces on both sides of the rotary wings 7 alternately unfold into a upwardly convex curved surface shape, and therefore, it is possible to glide like a paragliding device and improve energy efficiency of generating a lift force by use of a forward speed. In particular, when the circular motion curved rod 79 is used as shown in FIG. 26, the circular motion curved rod 79 rotates in only one direction at an almost constant speed, and thus, the wing membrane 75 unfolds at an optimal angle at a right timing without inertial resistance or vibration noise and energy efficiency is further increased.

4. A windshield 83 enhances lift, and a leg rest 82 assists flight.

The windshield 83 located on the side of the fuselage 1 protects a pilot from the rotary wings 7, and pushes the wind, being pushed from the left and right side to the center of the fuselage 1 due to rotary wing flapping, in a vertically downward direction, thereby enhancing a lift force. At a time of flying at a high speed in a prone position, the leg rest 82 enable a pilot to simply control flight in such a way of flying with his or her thigh raised or changing the center of weight by moving the legs upward, downward, leftward, rightward, backward and forward.

FIG. 19 is an exemplary view of a motorcycle-shaped flight apparatus of the present invention, and the main features thereof are as follows.

1. Different rotational force transmission chain belts 524 for respective rotating shaft chain gears 613 transmit a rotational force. As shown in FIG. 20, the revolution shaft pedestal gear 311 serves as the rotational force transmission chain gear 523, and the rotational force may be transmitted to the wing rotation shaft through each rotation shaft chain gear 613. Meanwhile, as shown in FIG. 28, in a case where the rotational force transmission process proceeds in the order of the revolution shaft pedestal gear 311, the rotational force transmission auxiliary gear 525, the rotational force transmission spur gear 521, the rotational force transmission chain gear 523, the rotational force transmission chain belt 524, and the rotation shaft chain gears 613, a plurality of rotational transmission chain belts 524 is installed on one plane, so it is possible to effectively reduce a required length in the direction of the wing revolution shaft 4 of the rotary flapping mechanism.

2. It is possible to control an inclination, a direction of travel, and a forward speed of the flight apparatus by controlling a flapping speed between a pair of left and right rotary flapping mechanisms 9 in front of an occupant and a pair of left and right rotary flapping mechanisms 9 behind the occupant. That is, if the center of weight of the flight apparatus is moved forward, backward, leftward, and rightward in a manner in which the occupant moves his or her body while controlling a flapping speed of each pair of rotary flapping mechanisms 9 provided in front of and behind the occupant by using accelerators installed at flight control handles 81 on the left and right sides of the occupant, it is possible to control the flight to travel in forward, backward, leftward, rightward, upward, and downward directions as easily as a motorcycle. Meanwhile, in order to lower the center of weight of the flight apparatus, a battery 11 is preferably disposed at an appropriate height in a lower central portion for stable operation.

FIGS. 21 to 25 are exemplary views of a large-sized flight apparatus, and the main features thereof are as follows.

1. Since four rotary flapping mechanisms 9 respectively installed at the left, right, front, and backsides of the fuselage 1 are provided with drive sources 2 individually; it is possible to control the flight to ascent, descent, travel forward, travel backward, change in direction, and the like by independently controlling a flapping speed of each rotary flapping mechanism 9 like a quadcopter drone.

2. If a fixed wing 12 capable of controlling an angle of elevation and an angle of direction is installed on the fuselage 1, it is possible to implement a lift generating function, a gliding function, a direction control function, and energy efficiency improvement.

In particular, in a case where the stators 12 are installed in a V-shape with the wing-tips of the both wings slightly upward, when the flight apparatus moves forward and the fuselage 1 is tilted to one side, a lateral length of a wing in the tilted direction is increased, a lift force is increased, and a lift force is decreased on the opposite wing, so a restoring force to return to the original position is generated, thereby increasing flight stability.

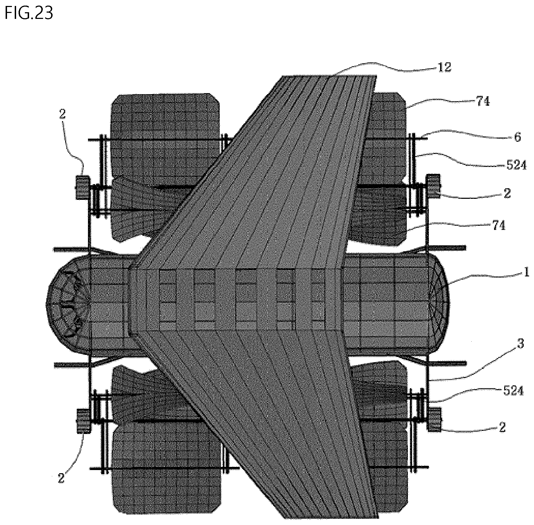

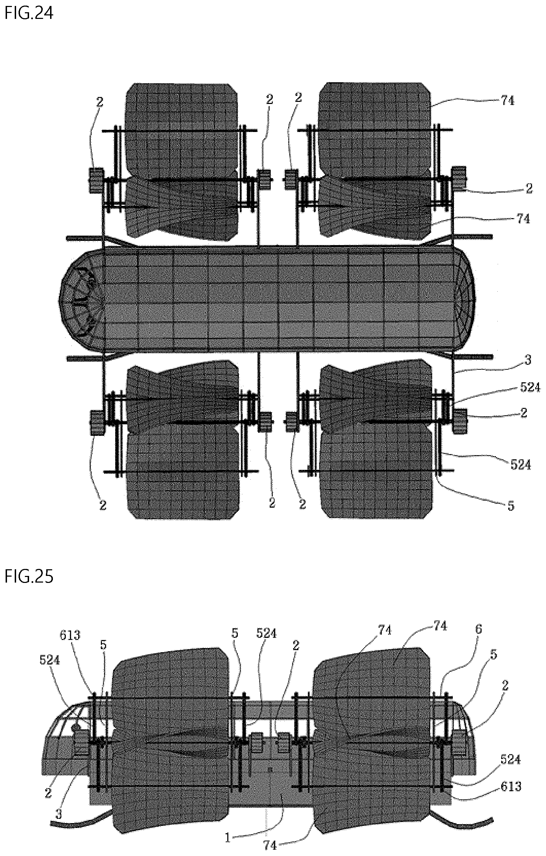

3. The stators 12 may be installed as shown in FIG. 23 or may not be installed as shown in FIG. 24, and a principle and method of transmitting a driving force to the rotary wings 7 are the same as illustrated in FIG. 18, 27, 20, or 28.

Meanwhile, a flapping method of the rotary wings 7, in which a drive source 2 provides a driving force, may be developed as a new fan or ventilator that replaces an existing propeller-type fan or ventilator. In addition, since a flow (flow rate, flow rate, direction, etc.) of various fluids such as water or oil can be changed, watertightness may be secured and thus it is possible to be used in a propulsion generating device for vehicles such as ships or submarines.

Although the present invention has been described with particular embodiments, the present invention is not limited to those embodiments, and it will be appreciated that various modifications, additions and substitutions are possible, without departing from the scope and spirit of the following claims.

1: fuselage
11: battery
12: stator
2: drive source
21: driver gear
211: driver spur gear
3. flapping mechanism support
31: wing revolution shaft pedestal
311: revolution shaft pedestal gear
32: driving force transmission member
321: driving force transmission spur gear
322: driving force transmission barbell gear
33: driving force transmission shaft
4: wing revolution shaft
41: wing revolution shaft gear
411: revolution shaft gear
412: revolution shaft barbell gear
5: wing revolution arm
51: wing rotation shaft pedestal
52: rotational force transmission member
521: rotational force transmission spur gear
522a: rotational force receiving barbell gear
522b: rotational force transmission barbell gear
523: rotational force transmission chain gear
524: rotational force transmission chain belt
525: rotational force transmission auxiliary gear
53: rotational force transmission shaft
6: wing rotation shaft
61: wing rotation shaft gear
611: rotation shaft spur gear
612: rotation shaft barbell gear
613: rotation shaft chain gear
7: rotary wing
71: planar rotary wing
72: curved rotary wing
73: twisted planar wing
74: twisted curved wing
75: wing membrane

76: wing outer frame
77: arc motion curved rod
78: highly elastic connecting member
79: circular motion curved rod
80: angle-of-attack-of-wing rotation shaft
81: flight control knob
82: leg rest
83: windshield
9: rotary flapping mechanism

**Claims**

1. A rotary flapping-wing flight apparatus having at least one rotary flapping mechanism provided on each of left and right sides of a fuselage, wherein the at least one rotary flapping mechanism have two or more rotary wings at regular intervals, which generate a lift force upon receiving a driving force from a drive source, by flapping in a dual rotation method that revolve around the wing revolution shaft and at the same time rotate around the wing rotation shaft,

   wherein, the driving source and a wing flapping mechanism support for supporting each of the rotary flapping mechanisms are coupled to the fuselage of the flight device,
   wherein the wing flapping mechanism support is provided with: driving force transmission member configured as a driven gear or chain belt capable of transmitting a driving force of the drive source to a wing revolution shaft of each rotary flapping mechanism; and a wing revolution shaft pedestal surrounding and supporting the wing revolution shaft so as to enable rotation in place, wherein a revolution shaft pedestal gear is fixedly coupled to a side surface of each wing revolution shaft pedestal; in a shape of an outer toothed gearwheel roundly surrounding the wing revolution shaft so as to enable rotation in place,
   wherein each of the rotary flapping mechanism is provided with: a wing revolution shaft extending in a direction almost parallel to the ground; two or more wing rotation shafts extending parallel to the wing revolution shaft at a same revolution distance and revolution interval; and wing revolution arms provided at a same installation interval for connecting the wing revolution shaft and each of the wing rotation shaft,
   wherein each of the wing revolution arms is provided with: a rotational force transmission member consisted with driven gear, chain belt, or the like and rotating in engagement with the revolution shaft pedestal gear in response to the wing revolution shaft rotating in place to transmit a rotational force to each of the wing rotation shafts; and a wing rotation shaft pedestal surrounding and supporting each of the wing rotation shafts so as to enable rotation in place,
   wherein each of the wing rotation shaft is provided with: one rotary wing in a shape in which two thin curved bodies of the same size are fixedly coupled to each other so as to be symmetrical about the wing rotation shaft; and one or more wing rotation shaft gears each having a shape of an external toothed wheel surrounding the wing rotation shaft that are fixedly coupled to it,
   wherein the rotational force transmission member is provided with a combination of various gears or a combination of various gears or a combination of gears and chain belts which converts and transmits a rotational force of the wing revolution shaft to each of the wing rotation shaft gears, so that a rotation direction of the wing revolution shaft is opposite to a revolution direction thereof and a rotation angular velocity is 0.5 times a revolution angular velocity,
   wherein the rotational direction and the correlation between the revolution phase and the rotation phase of each of the rotary wings are set such that the rotary wings flap downward to descend vertically in a state where the rotation phase of the rotary wings is almost horizontal in a revolution phase where each of the wing rotation shaft passes through a farthest point from the fuselage, while the rotary wings flap upward to rise vertically in a state where the rotation phase of the rotary wings is almost vertical in a revolution phase where each of the wing rotation shaft passes through a closest point to the fuselage,
   wherein the rotary wings revolving around the wing revolution shaft in a circulation direction of inner middle, center top, outer middle and center bottom ends thereof, when viewed from the fuselage,
   at a time of passing through the inner middle portion, flap vertically upward without resistance of a surrounding fluid in a state in which wing surfaces are erected in a substantially vertical direction, thereby hardly generating a negative lift force;
   at a time of passing through the upper central portion, flap outward with the wing surfaces moving outward while tilting upward at 45 degrees, so that the surrounding fluid is pushed outward and downward along the inclined wing surfaces, thereby generating a positive lift force;

at a time of passing through the outer middle portion, flaps downward with the wing surfaces unfolded in a substantially horizontal direction, so that the surrounding fluid is pushed vertically downward, thereby generating a positive lift force;

at a time of passing through the lower central portion, flap inward with the wing surface tilting downward at 45 degrees, so the surrounding fluid is pushed downward along the inclined wing surface, thereby generating a positive lift force; and at a time of approaching to the inner middle portion again, generate a positive lift force as the fluid below the fuselage is rapidly extruded downward by the rotary wings compressing the fluid while approaching from both sides; and thus,

a positive lift force is effectively generated with almost no negative lift force in the 360-degree full revolution phase period of the rotary wings rotating while revolving.

2. The rotary flapping-wing flight apparatus of claim 1, wherein a combination of barbell gears engaged with each other and rotating is provided in the driving force transmission member or the rotational force transmission member.

3. The rotary flapping-wing flight apparatus of claim 1, wherein a combination of a plurality of gears and chain belts is provided in the driving force transmission member or the rotational force transmission member.

4. The rotary flapping-wing flight apparatus of claim 1, wherein the wing surfaces of the rotary wings are formed such that left- and right-wing surfaces are in line symmetrical with respect to the wing rotation shaft, and one wing surface far from the fuselage is in an upwardly convex shape while the other wing surface close to the fuselage is in a downwardly convex shape.

5. The rotary flapping-wing flight apparatus of claim 1, wherein a wing outer frame of the rotary wings is formed of a rigid material, and the wing surfaces are formed of a highly elastic and highly elastic wing membrane like a trampoline and is coupled to the wing outer frame by a highly elastic connecting member, so that the entire both wing surfaces of the rotary wings alternately unfolds upward in a convex curved shape when the both wing surfaces of the rotary wings alternately receive upward pressure from the fluid.

6. The rotary flapping-wing flight apparatus of claim 1, wherein a wing outer frame of the rotary wings is formed of a rigid material, the wing surfaces are formed of a round and flexible curved wing membrane, and front and rear ends of two or more circular motion curved rods each in a shape of round curved rod combined with the wing membrane are hinged to a front outer frame and a rear outer frame of the wing outer frame at an appropriate interval between the front outer frame and the rear outer frame of the wing outer frame so as to enable a circular motion in a vertical direction, so that each of the circular motion curved rods rotates and the both wing surfaces of the rotary wings alternately unfold upwards in a convex shape when the both wing surfaces of the rotary wings alternately receive upward pressure from the fluid.

7. The rotary flapping-wing flight apparatus of claim 1 or claim 4, wherein the rotary wings have the wing surfaces in a spirally long and gently twisted propeller shape in line symmetry along the wing rotation shaft in order to generate not just the fuselage lifting force but also the forward propulsion by the rotary flapping.

8. The rotary flapping-wing flight apparatus of claim 1, wherein a plurality of the rotary flapping mechanisms is each provided with one or more drive sources, or revolution speeds of the plurality of rotary flapping mechanisms are controlled differently from each other.

9. The rotary flapping-wing flight apparatus of claim 1 or claim 7, wherein the flapping flight apparatus are able to be worn by a pilot's back, the rotary flapping mechanisms located on the left and right sides of the fuselage of the flight apparatus are coupled to each other by an angle-of- attack of-wing rotation shaft extending in a transverse direction of the fuselage, and the angle-of- attack of-wing rotation shaft is hinged to the fuselage so as to enable an arc motion in a vertical direction based on the fuselage.

10. The rotary flapping-wing flight apparatus of claim 1, wherein the rotary flapping-wing flight apparatus is in a shape of a motorcycle or large-sized vehicle, with four or more rotary flapping mechanisms respectively disposed at front, rear, left, and right sides thereof.

11. The rotary flapping-wing flight apparatus of claim 1, wherein the rotary flapping-wing flight apparatus is a transport capable of water-tightness or underwater operation by securing watertightness.

**12.** The rotary flapping-wing flight apparatus of claim 1, wherein the rotary flapping-wing flight apparatus is a fan or a blowing device in which a plurality of rotary flapping mechanisms is coupled to a fuselage to move fluid while a position of the fuselage is fixed.

FIG.1

FIG.2

FIG.3

FIG.4

FIG.5

FIG.6

FIG.7

FIG.8

FIG.9

FIG.10A

FIG.10B

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG.28

## INTERNATIONAL SEARCH REPORT

| International application No. |
|---|
| **PCT/KR2021/016284** |

### A. CLASSIFICATION OF SUBJECT MATTER

**B64C 33/02**(2006.01)i; **F16H 37/02**(2006.01)i; **F16H 9/24**(2006.01)i

According to International Patent Classification (IPC) or to both national classification and IPC

### B. FIELDS SEARCHED

Minimum documentation searched (classification system followed by classification symbols)

B64C 33/02(2006.01); A63H 27/18(2006.01); A63H 27/28(2006.01); B64C 33/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플래핑(flapping), 날개(wing), 모터(motor), 기어(gear), 힌지(hinge)

### C. DOCUMENTS CONSIDERED TO BE RELEVANT

| Category* | Citation of document, with indication, where appropriate, of the relevant passages | Relevant to claim No. |
|---|---|---|
| A | KR 10-2007-0049271 A (JANG, Il Hyung) 11 May 2007 (2007-05-11)<br>See paragraphs [0027]-[0062] and figures 1-9. | 1-12 |
| A | JP 07-027693 U (HIRAKO, Shinichi) 23 May 1995 (1995-05-23)<br>See paragraph [0004] and figure 1. | 1-12 |
| A | KR 20-0417261 Y1 (AHN, Dong Keun) 24 May 2006 (2006-05-24)<br>See paragraphs [0005]-[0007] and figures 3-6. | 1-12 |
| A | US 2003-0096553 A1 (KIM et al.) 22 May 2003 (2003-05-22)<br>See paragraphs [0058]-[0067] and figures 8-11. | 1-12 |
| A | US 6227483 B1 (THERRIAULT, Clement) 08 May 2001 (2001-05-08)<br>See claims 5 and 7 and figures 1-10. | 1-12 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 February 2022** | **10 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/016284**

| Patent document cited in search report | | | Publication date (day/month/year) | Patent family member(s) | | | Publication date (day/month/year) |
|---|---|---|---|---|---|---|---|
| KR | 10-2007-0049271 | A | 11 May 2007 | None | | | |
| JP | 07-027693 | U | 23 May 1995 | None | | | |
| KR | 20-0417261 | Y1 | 24 May 2006 | None | | | |
| US | 2003-0096553 | A1 | 22 May 2003 | KR | 10-0451984 | B1 | 08 October 2004 |
| | | | | KR | 10-2003-0040894 | A | 23 May 2003 |
| | | | | US | 6769949 | B2 | 03 August 2004 |
| US | 6227483 | B1 | 08 May 2001 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 101845748 A

- KR 101845748